# EUROPÄISCHE PATENTANMELDUNG

(11) **EP 2 796 029 A2**
(43) Veröffentlichungstag der Anmeldung: **29.10.2014**
(21) Anmeldenummer: 14165914.4
(22) Anmeldetag: 25.04.2014
(51) Int. Cl.: A01B 63/10, A01C 23/00

(54) **Arbeitsmaschine**

(30) Priorität: 26.04.2013 DE 102013207623; 12.06.2013 DE 102013210924
(71) Anmelder: Schaeffler Technologies GmbH & Co. KG, 91074 Herzogenaurach (DE)
(72) Erfinder: Gerner, Armin, 96178 Pommersfelden (DE); Wittmann, Bernd, 96178 Pommersfelden (DE); Wager, Stefan, 90419 Nürnberg (DE)

(57) **Zusammenfassung**

Die Erfindung betrifft eine Arbeitsmaschine (1, 51), insbesondere eine Feldspritze, umfassend einen Ausleger (5, 55) mit einem Mittelsegment (7, 57) und mit einer Anzahl von am Mittelsegment (7, 57) angeordneten Auslegerarmen (9, 59), wobei die Auslegerarme (5, 59) jeweils eine Anzahl von relativ zueinander beweglichen Teilsegmenten (11, 61) umfassen. Hierbei ist eine Anzahl von elektromechanischen Aktuatoren (21, 33, 71, 83) zur Höhenverstellung des Auslegers (5, 55) und/oder zur Betätigung des oder jeden Teilsegments (11, 61) eines jeweiligen Auslegerarms (5, 59) umfasst. Weiterhin betrifft die Erfindung eine Betätigungsvorrichtung (20, 70) mit einer Steuereinheit (29, 79) für einen Ausleger (5, 55) einer Arbeitsmaschine.

## Beschreibung

### Gebiet der Erfindung

Die Erfindung betrifft eine Arbeitsmaschine, insbesondere Feldspritze, umfassend einen Ausleger mit einem Mittelsegment und mit einer Anzahl von am Mittelsegment angeordneten Auslegerarmen, wobei die Auslegerarme jeweils eine Anzahl von relativ zueinander beweglichen Teilsegmenten umfassen.

Weiterhin betrifft die Erfindung eine Betätigungsvorrichtung mit einer Steuervorrichtung für einen Ausleger einer Arbeitsmaschine.

### Hintergrund der Erfindung

Eine Feldspritze dient bei landwirtschaftlichen oder forstwirtschaftlichen Arbeitsmaschinen ebenso wie bei Nutzfahrzeugen dem Ausbringen von Spritzmitteln wie Düngemitteln, Insektiziden, Pestiziden oder von sonstigen gasförmigen oder flüssigen Materialien im Bereich der Landwirtschaft. Unter dem Begriff einer Feldspritze sind vorliegend Anbau-, Aufbau-, Anhänge- und selbstfahrende Feldspritzen zusammengefasst. Häufig wird eine Feldspritze an einer entsprechend ausgebildeten Zugmaschine an- oder aufgesetzt, um sie an den Einsatzort zu bringen und dort einsetzen zu können.

Um die von einer Feldspritze während des Überfahrens durch eine Zugmaschine abdeckbare Fläche möglichst groß zu gestalten, ist eine Feldspritze üblicherweise mit einem steuerbaren Gestänge ausgebildet. Eine solches Gestänge umfasst einen Ausleger, wobei der Ausleger mit einer Anzahl von Auslegerarmen ausgebildet ist, über die das auszubringende Gut über an den Auslegerarmen angeordneten Düsen auf der zu behandelnden Fläche verteilt werden kann.

Während in der Arbeitsstellung, also zum Beispiel für den Feldbetrieb, eine möglichst große Breite der Auslegerarme wünschenswert ist, darf in der Transportstellung die maximale Breite des Auslegers die im Straßenverkehr erlaubten Höchstmaße nicht überschreiten. So müssen die Auslegerarme im Straßenverkehr eingeklappt sein, damit die erlaubte Höchstbreite nicht überschritten wird. Dabei wird der Ausleger beispielsweise an das obere Ende einer zu dessen Höhenverstellung eingesetzten Hubvorrichtung gefahren und anschließend in Richtung einer Fahrerkabine bzw. in Fahrtrichtung zusammengeklappt. Alternativ kann der Ausleger beispielsweise auch derart aufgestellt werden, dass sich die Auslegerarme vom Mittelsegment ausgehend im Wesentlichen senkrecht nach oben erstrecken. Das Mittelsegment befindet sich gegenüber den Auslegerarmen dann am tiefsten Punkt des Auslegers.

Für den Feldeinsatz werden die einzelnen Auslegerarme gängigerweise zur vollen Einsatzbreite ausgeklappt. Für einen gleichbleibenden Abstand zum Boden können die einzelnen Teilsegmente oder auch Flügel der Auslegerarme während des Betriebs entsprechend angepasst werden. Ziel der Höheneinstellung ist es dabei, den Ausleger auch in unebenem Gelände immer möglichst bodennah und in einem konstanten Abstand zu halten, um so auszubringendes Gut möglichst effizient verteilen zu können.

Das Ausklappen der einzelnen Teilsegmente der Auslegerarme ebenso wie die variable Höhenverstellung des Hubgestänges bzw. des kompletten Auslegers und/oder der einzelnen Auslegerarme zur Realisierung eines konstanten Abstands zum Boden erfordert hierbei eine sichere und gezielte Steuerung.

Dazu ist aus der DE 10 2009 059 111 A1 eine Feldspritze mit einem aus mehreren zueinander verschwenkbaren Abschnitten aufgebauten Ausleger bekannt. Der Ausleger ist aus einer Transportstellung in eine Arbeitsstellung und/oder in die Transportstellung zurück verschwenkbar. Zum Betätigen des Auslegers bzw. zum Ein- und Ausschwenken der einzelnen Abschnitte der Feldspritze werden hydraulische Aktuatoren, wie beispielsweise Hydraulikzylinder eingesetzt. Der Hydraulikzylinder wird hierbei mittels Hydrauliköl mit Druck beaufschlagt, wodurch die gewünschte lineare Bewegung zur Steuerung des Auslegers gewährleistet ist.

Der Einsatz hydraulischer Aktuatoren bringt jedoch einige unerwünschte Nachteile mit sich. Insbesondere ist bei kalten Temperaturen nur eine sehr langsame Verstellung des Auslegers bzw. der jeweiligen Auslegerarme möglich, da hydraulische Systeme bei niedrigeren Temperaturen aufgrund des eingesetzten Hydrauliköls sehr träge reagieren. Ein solch verzögertes Ansprechverhalten macht sich insbesondere bei der notwendigen Höhenregulierung des Auslegers bzw. beim Betätigen der einzelnen Auslegerarme in unebenem Gelände bemerkbar. Zusätzlich sind eine aufwändige Ansteuerung und zusätzliche Aggregate für die Hydraulik nötig, die wiederum durch potentielle Ölleckageverluste zur Umweltverschmutzung beitragen können.

### Aufgabe der Erfindung

Es ist demnach eine erste Aufgabe der Erfindung, eine Arbeitsmaschine anzugeben, die durch eine sichere und einfach zu handhabende Steuerung des Auslegers eine möglichst optimale Dosierung des auszubringenden Gutes und bei gleichzeitig großer Arbeitsbreite den Straßeneinsatz ermöglicht.

Eine zweite Aufgabe der Erfindung ist es, eine Betätigungsvorrichtung für eine Arbeitsmaschine anzugeben.

### Zusammenfassung der Erfindung

Die erste Aufgabe der Erfindung wird erfindungsgemäß gelöst durch eine Arbeitsmaschine, insbesondere eine Feldspritze, umfassend einen Ausleger mit einem Mittelsegment und mit einer Anzahl von am Mittelsegment angeordneten Auslegerarmen, wobei die Auslegerarme jeweils eine Anzahl von relativ zueinander beweglichen Teilsegmenten umfassen. Hierbei ist eine Anzahl von elektromechanischen Aktuatoren zur Höhenverstellung des Auslegers und/oder zur Betätigung des oder jeden Teilsegments eines jeweiligen Auslegerarms umfasst.

Die Erfindung geht von der Tatsache aus, dass es zum sicheren Betrieb einer Arbeitsmaschine - also insbesondere einer Feldspritze - im Feldeinsatz der gezielten Regelung des Auslegers und seiner Auslegerarme bedarf. Unter Arbeitsmaschine werden vorliegend im Wesentlichen land- und forstwirtschaftliche Arbeitsmaschinen ebenso wie Nutzfahrzeuge verstanden. Der Ausleger einer Arbeitsmaschine muss in der Transportstellung so einstellbar sein, dass dessen maximale Breite die im Straßenverkehr erlaubten Höchstmaße nicht überschreitet. Im Feldeinsatz ist eine gezielte Regelung besonders unter Berücksichtigung der Höhenverstellbarkeit notwendig, um beispielsweise Spritzmittel möglichst effizient auf Pflanzen verteilen zu können. Die bislang zur Regelung eines Auslegers bzw. der Auslegerarme eingesetzten hydraulischen Aktuatoren sind hierbei insbesondere hinsichtlich ihrer Dynamik und Effizienz eingeschränkt.

Unter Berücksichtigung dessen erkennt die Erfindung, dass eine einfache und effiziente Regelung dann umsetzbar ist, wenn der hydraulische Antrieb des Auslegers bzw. der entsprechenden Auslegerarme einer Feldspritze durch einen elektromechanischen Antrieb ersetzt wird. Hierbei kommen einer oder mehrere elektromechanische Aktuatoren zum Einsatz, wobei entweder nur ein elektromechanischer Aktuator zur Höhenverstellung des Auslegers oder - alternativ oder zusätzlich - einer oder mehrere elektromechanische Aktuatoren zur Betätigung des oder jeden Teilsegments eines jeweiligen Auslegerarms eingesetzt sind.

Ein besonderer Vorteil der elektromechanischen Verstellung gegenüber einer hydraulischen Verstellung liegt zum Beispiel in der gleichbleibenden Verstellgeschwindigkeit des Auslegers unabhängig von der Umgebungstemperatur, wodurch das Ansprechverhalten des Auslegers und/oder der Auslegerarme verbessert wird. Darüber hinaus können unerwünschte Ölverluste vermieden werden, was im Agrarbereich insbesondere hinsichtlich des Umweltschutzes eine große Rolle spielt.

Weiterhin kann das zu verteilende Gut effektiver an seinen Einsatzort gebracht werden und die Windverwirbelung durch die gezielte Ansteuerung reduziert werden. Dadurch ist es möglich, die Dosierung des auszubringenden Gutes zu optimieren, so dass hiervon weniger ausgebracht werden muss. Hierdurch werden sowohl die Kosten gesenkt und als auch die Umwelt geschont.

Insgesamt kann so durch den Einsatz eines oder mehrerer elektromechanischer Aktuatoren zur Verstellung und Betätigung des Auslegers und/oder seiner Auslegerarme eine einfachere Regelbarkeit, eine höhere Dynamik sowie eine gesteigerte Effizienz bei der Regelung eines Auslegers erreicht werden.

Der oder jeder elektromechanische Aktuator erzeugt beispielsweise aus einer Drehbewegung eines Motors eine lineare Stellbewegung, die zur Verstellung des Auslegers und/oder der Auslegerarme notwendig ist. Die Anzahl und die Anordnung des oder der eingesetzten Aktuatoren ist hierbei insbesondere abhängig von der Ausbildung der Arbeitsmaschine. Der oder jeder eingesetzte elektromechanische Aktuatoren zur Betätigung der Teilsegmente eines jeweiligen Auslegerarms sind hierbei grundsätzlich genau so ausgebildet, wie der oder jeder elektromechanische Aktuator, der zur Höhenverstellung des kompletten Auslegers eingesetzt wird.

Zur Höhenverstellung des Auslegers ist zweckmäßigerweise ein elektromechanischer Aktuator eingesetzt, wobei dieser die Einstellung des gewünschten Abstands des gesamten Auslegers zum Boden, sowohl in der Transport- als auch in der Arbeitsstellung, ermöglicht. Alternativ oder zusätzlich können zum Betätigen der einzelnen Auslegerarme bzw. der Teilsegmente der Auslegerarme jeweils ein oder mehrere elektromechanische Aktuatoren eingesetzt werden. Unter dem Begriff Betätigen werden hierbei sowohl ein vollständiges Einklappen (Transportstellung), ein Ausklappen (Arbeitsstellung) sowie ein Schwenken der Teilsegmente der Auslegerarme verstanden.

Der Ausleger, der Teil eines Gestänges ist, umfasst ein Mittelsegment mit einer Anzahl von am Mittelsegment angeordneten Auslegerarmen. Das Mittelsegment ist hierbei zweckmäßigerweise zwischen den Auslegerarmen angeordnet und mit einem Trägerelement eines Fahrzeugs koppelbar. Die Kopplung des Mittelsegments erfolgt hierbei insbesondere über eine Hubvorrichtung, die der Höhenverstellung des Auslegers dient.

Die relativ zueinander beweglichen Teilsegmente der Auslegerarme reihen sich insbesondere entlang einer Achse aneinander und sind zweckmäßigerweise über Gelenke miteinander verbunden. Durch die Gelenke wird ein teilweise oder vollständiges Einklappen und/oder ein Ausklappen der Teilsegmente ermöglicht, so dass die jeweils geforderte Breite des Auslegers umsetzbar ist. Auch ein Verschwenken der Teilsegmente ist so grundsätzlich möglich.

Insbesondere sind an den Teilsegmenten der Auslegerarme Spritzdüsen zum Ausbringen von Spritzmittel angeordnet. Diese Spritzdüsen können im Betrieb mit einem Spritzmitteltank verbunden sein. Die Anzahl der Spritzdüsen ebenso wie deren Anordnung an den Auslegerarmen ist hierbei abhängig von den Abmessungen des Auslegers der Arbeitsmaschine bzw. der Feldspritze.

In einer vorteilhaften Ausgestaltung der Erfindung ist zur Höhenverstellung des Auslegers eine am Mittelsegment des Auslegers ansetzende Hubvorrichtung vorgesehen, die einen elektromechanischen Aktuator umfasst. Mit anderen Worten ist der elektromechanische Aktuator Teil der Hubvorrichtung. Auf diese Weise kann der gesamte Ausleger mit den teilsegmentierten Auslegerarmen in seiner Höhe verstellt und auch in unebenem Gelände mit einem konstanten Abstand immer möglichst bodennah gehalten werden. Zweckmäßigerweise ist der Ausleger insbesondere über die Hubvorrichtung mit einem Trägerelement eines Fahrzeugs koppelbar.

Vorzugsweise ist an dem oder jedem Teilsegment wenigstens ein elektromechanischer Aktuator zur Betätigung des jeweiligen Teilsegments angeordnet. Mit anderen Worten können entweder einer oder mehrere elektromechanische Aktuatoren an einem jeweiligen Teilsegment angeordnet sein. So kann jedes Teilsegment separat betätigt und beispielsweise eingeklappt, ausgeklappt oder geschwenkt werden. Ein elektromechanischer Aktuator kann hierbei beispielsweise zwischen zwei Teilsegmenten oder zwischen einem Teilsegment und dem Mittelsegment des Auslegers angeordnet sein.

Zweckmäßigerweise umfasst der elektromechanische Aktuator einen Elektromotor und eine Wandlereinheit zur Drehmomentumwandlung. Der Elektromotor liefert insbesondere ein Drehmoment, welches mittels der Wandlereinheit in eine lineare Stellbewegung umgewandelt wird. Der Elektromotor kann beispielsweise als sogenannter bürstenloser Gleichstrommotor (BLDC), als ein bürstenbehafteter Gleichstrommotor (DC) oder als ein Torquemotor ausgebildet sein. Die Drehmomentübertragung vom Elektromotor kann weiterhin direkt oder mittels einer getrieblichen Komponente erfolgen, wobei die getriebliche Komponente mit oder ohne Übersetzung ausgeführt sein kann. Beim Einsatz einer getrieblichen Komponente dient diese vorzugsweise der Kopplung des Elektromotors mit der Wandlereinheit.

Der Elektromotor kann weiterhin achsparallel oder koaxial als ein so genannter Hohlwellenmotor ausgeführt sein. Bei einer achsparallelen Anordnung kann als Verbindungselement zur Wandlereinheit beispielswese ein Riemen, eine Kette oder ein Verzahnungsgetriebe eingesetzt sein. Bei einer nicht achsparallelen Anordnung mit beliebigem Winkel kann die mechanische Leistung des Elektromotors mittels eines Kegelradgetriebes übertragen werden. Bei einer koaxialen Anordnung wird die Leistung direkt auf die Wandlereinheit übertragen.

Die Wandlereinheit, die zur Umwandlung der rotativen in eine lineare Bewegung eingesetzt ist, kann beispielsweise als ein Kugelgewindetrieb (KGT), ein Planetenwälzgetriebe (PWG), ein Trapezgewinde (RGT) oder als Spindel mit Trapezprofil, Dreiecksprofil, Sägezahnprofil oder auch als Rundprofil ausgeführt sein. Zur Verminderung der Reibung können die Profile vollständig oder nur teilweise mit einem reibungsverminderten Belag ausgeführt werden. Alternativ könnte die Reibung durch eine vollständige oder teilweise Füllung mit einem Schmiermittel verringert werden.

Vorzugsweise umfasst die Wandlereinheit ein Getriebeelement. Das Getriebeelement kann beispielsweise als ein Riemen, eine Kette oder ein Verzahnungsgetriebe wie beispielsweise ein Stirnradgetriebe ausgebildet und mit oder ohne Übersetzung ausgeführt sein.

Zweckmäßigerweise ist zur Steuerung des oder jeden elektromechanischen Aktuators zumindest eine Steuereinheit umfasst. Mit anderen Worten ist zur Steuerung des oder jeden elektromechanischen Aktuators zumindest eine Steuereinheit notwendig. Die Steuereinheit dient der Ansteuerung des elektromechanischen Aktuators, bzw. des Elektromotors als Teil des elektromechanischen Aktuators und kann beispielsweise als ein externes Steuergerät oder auch als ein internes Anbausteuergerät ausgebildet sein.

In einer weiter vorteilhaften Ausgestaltung ist zumindest eine Sperrvorrichtung zur Arretierung des Auslegers und/oder des oder jeden Auslegerarms umfasst. Der Einsatz zumindest einer Sperrvorrichtung ist dann notwendig, wenn eine gewünschte Position des Auslegers und/oder des oder jeden Auslegerarms sowie eine Einsparung von Energie erreicht werden soll. Hierzu kann die Sperrvorrichtung beispielsweise zwischen dem Elektromotor und der Wandlereinheit angeordnet sein, so dass eine unerwünschte Verstellung durch äußere Kräfte, wie beispielsweise durch Vibrationen oder Stöße, nicht möglich ist. Die oder jede Sperrvorrichtung kann beispielsweise als Wellenklemme, als Hackenklemme, als Schlingfeder, als Klaue, als Hubmagnet oder auch als schaltbarer Freilauf ausgeführt sein.

Vorzugsweise ist an dem oder jedem Teilsegment des oder jeden Auslegerarms zumindest ein Sensor zu einer Abstandsmessung gegenüber dem Untergrund angeordnet. Weiterhin ist zweckmäßigerweise auch ein Sensor am Mittelsegment des Auslegers angeordnet. Die Sensoren an den Teilsegementen dienen der Abstandsmessung der Auslegerarme zum Untergrund - also im Feldeinsatz zum Boden -, wohingegen ein Sensor am Mittelsegment der Abstandsmessung des kompletten Auslegers dient. Der jeweilige Sensor erfasst hierbei die aktuelle Lage bzw. Position des jeweiligen elektromechanischen Aktuators und übermittelt das resultierende Steuersignal zweckmäßigerweise an eine Steuereinheit, so dass auch unebenem Gelänge der notwendige Abstand des Auslegers bzw. der entsprechenden Auslegerarme zum Boden sichergestellt werden kann. Der oder jeder Sensor kann hierbei beispielsweise als ein Absolutsensor oder als ein Relativsensor ausgeführt sein und wahlweise am Elektromotor, am elektromechanischen Aktuator und/oder an der Peripherie, also dem umgebenden Hubgestänge, angebracht werden.

Die Steuereinheit ist dabei dazu eingerichtet und ausgebildet, die Aktuatoren des Auslegers in Abhängigkeit von den empfangenen Sensorsignalen zu steuern.

Die zweite Aufgabe der Erfindung wird erfindungsgemäß gelöst durch eine Betätigungsvorrichtung mit einer Steuereinheit für einen Ausleger einer Arbeitsmaschine, insbesondere für eine Feldspritze, wobei der Ausleger ein Mittelsegment und eine Anzahl von an diesem angeordneten Auslegerarmen umfasst, wobei der oder jeder Auslegerarm jeweils eine Anzahl von relativ zueinander beweglichen Teilsegmenten umfasst, wobei eine Anzahl von elektromechanischen Aktuatoren zur Höhenverstellung des Auslegers und/oder zur Betätigung des oder jeden Teilsegments eines jeweiligen Auslegerarms umfasst ist, und wobei die Steuereinheit zu Ansteuerung und Betätigung des oder jeden elektromechanischen Aktuators eingerichtet und ausgebildet ist.

Der Einsatz einer solchen Betätigungsvorrichtung mit zumindest einem elektromechanischen Aktuator ermöglicht eine sichere und einfach zu handhabende Steuerung eines Auslegers, so dass eine optimale Dosierung des auszubringenden Gutes, wie sie insbesondere in der Landwirtschaft beim Einsatz von Feldspritzen gefordert ist, sichergestellt werden kann.

Die Steuereinheit des oder jeden elektromechanischen Aktuators kann hierbei je nach Anforderung beispielsweise als externes Steuergerät oder als internes Steuergerät ausgebildet sein kann.

In einer vorteilhaften Ausgestaltung ist zur Höhenverstellung des Auslegers eine Hubeinrichtung mit einem Elektromotor und einer Wandlereinheit umfasst. Der Elektromotor liefert hierbei insbesondere ein Drehmoment, welches mittels der Wandlereinheit in eine lineare Stellbewegung umgewandelt wird. Die Drehmomentübertragung vom Elektromotor kann hierbei beispielsweise direkt oder mittels einer getrieblichen Komponente erfolgen, wobei die getriebliche Komponente mit oder ohne Übersetzung ausgeführt sein kann. Beim Einsatz einer getrieblichen Komponente dient diese vorzugsweise der Kopplung des Elektromotors mit der Wandlereinheit.

Weitere vorteilhafte Ausgestaltungen der Betätigungsvorrichtung ergeben sich aus den auf die Arbeitsmaschine gerichteten Unteransprüchen. Die hierzu genannten Vorteile können entsprechend sinngemäß auf die Betätigungsvorrichtung übertragen werden.

### Kurze Beschreibung der Zeichnungen

Im Folgenden werden Ausführungsbeispiele der Erfindung anhand einer Zeichnung näher erläutert. Dabei zeigen:
- Fig. 1: eine schematische teilweise Darstellung einer als Feldspritze ausgebildeten Arbeitsmaschine,
- Fig. 2: eine schematische teilweise Darstellung einer weiteren als Feldspritze ausgebildeten Arbeitsmaschine.
- Fig. 3: die Feldspritze gemäß Fig. 2 in einer Frontansicht, sowie
- Fig. 4: die Feldspritze gemäß den Fig. 2 und 3 in einer Draufsicht.

### Detaillierte Beschreibung der Zeichnungen

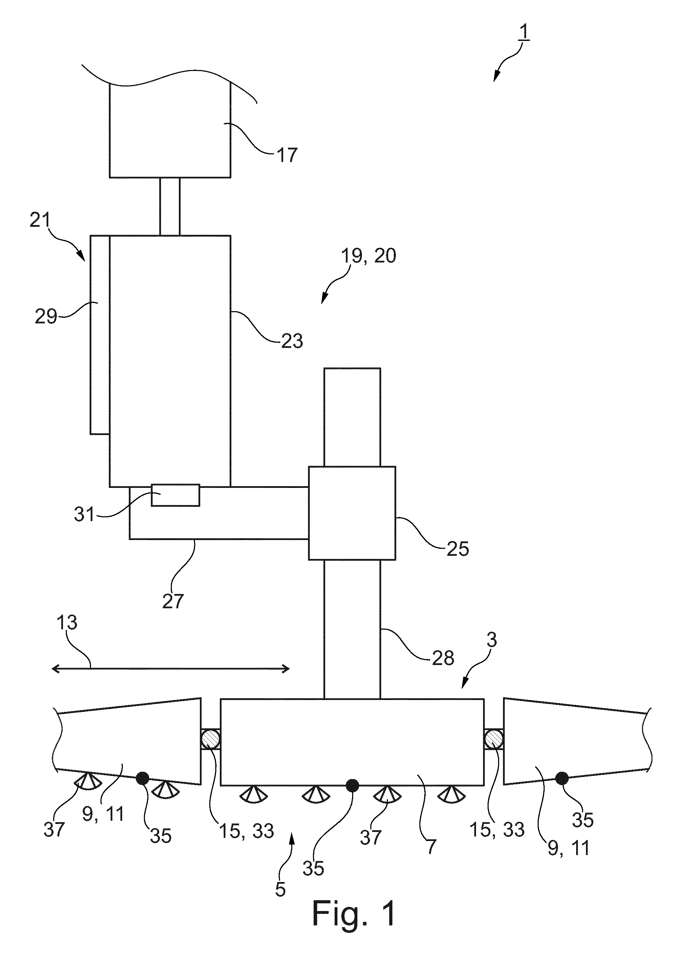

Fig. 1 zeigt einen Ausschnitt einer als Feldspritze ausgebildeten Arbeitsmaschine 1 in einer schematischen Darstellung. Die Feldspritze 1 umfasst ein Gestänge 3 mit einem Ausleger 5. Der Ausleger 5 umfasst vorliegend ein Mittelsegment 7 mit zwei an diesem angeordneten Auslegerarmen 9. Beide Auslegerarme 9 umfassen jeweils zwei zueinander bewegliche Teilsegmente 11, die sich entlang einer Achse 13 aneinanderreihen und über Gelenke 15 miteinander verbunden sind. Durch die Gelenke 15 wird ein Einklappen bzw. ein Ausklappen der Teilsegmente 11 ermöglicht, so dass die jeweils geforderte Breite des Auslegers 5 umsetzbar ist.

Weiterhin umfasst die Feldspritze 1 ein Trägerelement 17, über welches die Feldspritze 1 an einem nicht gezeigten Fahrzeug anbindbar ist. Zwischen dem Trägerelement 17 und dem Ausleger 5 des Gestänges ist eine Hubvorrichtung 19 angeordnet. Diese Hubvorrichtung 19 ist Teil einer Betätigungsvorrichtung 20 und dient der Höhenverstellung des Auslegers 5 und weist hierzu einen elektromechanischen Aktuator 21 auf.

Der elektromechanische Aktuator 21 ist hierbei zwischen dem Mittelsegment 7 des Auslegers 5 und dem Trägerelement 17 angeordnet. Der Ausleger 5 ist somit über den elektromechanischen Aktuator 21 als Teil der Hubvorrichtung 19 mit dem Trägerelement 17 gekoppelt. Durch Betätigung des elektromechanischen Aktuators 21 kann der gesamte Ausleger 5 in seiner Höhe verstellt werden, so dass dieser auch in unebenem Gelände in dem gewünschten Abstand zum Boden gehalten werden kann.

Der elektromechanische Aktuator 21 umfasst einen Elektromotor 23 und eine Wandlereinheit 25 zur Drehmomentumwandlung. Der Elektromotor 23, der vorliegend als bürstenloser Gleichstrommotor ausgebildet ist, liefert hierbei ein Drehmoment, welches mittels der Wandlereinheit 25 in eine lineare Stellbewegung umgewandelt wird. Die Drehmomentübertragung vom Elektromotor 23 zur Wandlereinheit 25 bzw. die Kopplung der beiden Komponenten 23, 25 erfolgt hierbei mittels eines als Riementrieb ausgeführten Getriebeelements 27 ohne Übersetzung. Die Wandlereinheit 25, die der Umwandlung der rotativen Bewegung des Elektromotors 23 in eine lineare Bewegung dient, ist vorliegend mit einem Kugelgewindetrieb ausgeführt.

Zur Ansteuerung des Elektromotors 23 des elektromechanischen Aktuators 21 umfasst die Betätigungsvorrichtung 19 eine Steuereinheit 29. Die Steuereinheit 29 kann auch als ein externes zentrales Steuergerät ausgebildet sein.

Weiterhin umfasst die Hubvorrichtung 19 eine als Wellenklemme ausgebildete Sperrvorrichtung 31. Die Sperrvorrichtung 31 dient der Fixierung einer gewünschten Position des Auslegers 5 und ist zwischen dem Elektromotor 23 und der Wandlereinheit 25 angeordnet. So kann eine unerwünschte Verstellung des Auslegers 5 durch äußere Kräfte, wie beispielsweise Stöße oder Vibrationen, verhindert werden.

Weiterhin sind zum Einklappen, Ausklappen oder Schwenken der Teilsegmente 11 der Auslegerarme 9 ebenfalls elektromechanische Aktuatoren 33 zwischen den jeweiligen Teilsegmenten 11 angeordnet. Diese elektromechanische Aktuatoren 33 sind ebenfalls Teil der Betätigungsvorrichtung 20 und ermöglichen das Betätigen, also das Einklappen, Ausklappen oder Schwenken der Auslegerarme 9 bzw. deren Teilsegmente 11.

Zur Abstandsmessung der Auslegerarme 9 bzw. des kompletten Auslegers 5 zum Untergrund bzw. zum Boden sind an jedem Teilsegment 11 ebenso wie an dem Mittelsegment 57 der beiden Auslegerarme 9 jeweils Sensoren 35 angeordnet. Die Sensoren 35 erfassen die aktuelle Lage bzw. Position der jeweiligen elektromechanischen Aktuatoren 21, 33, so dass auch auf unebenem Gelände der notwendige Abstand des Auslegers 5 bzw. der entsprechenden Auslegerarme 9 zum Boden sichergestellt werden kann. Die Sensoren sind vorliegend als Absolutsensoren ausgebildet. Die Sensorsignale werden an die Steuereinheit 29 weitergeleitet, ausgewertet und entsprechend zur Steuerung der jeweiligen elektromechanischen Aktuatoren 21, 33 genutzt.

Weiterhin sind an den Auslegerarmen 9 Spritzdüsen 37 angeordnet, die mit einem Spritzmitteltank verbunden sind, was vorliegend aufgrund der schematischen Darstellung nicht gezeigt ist.

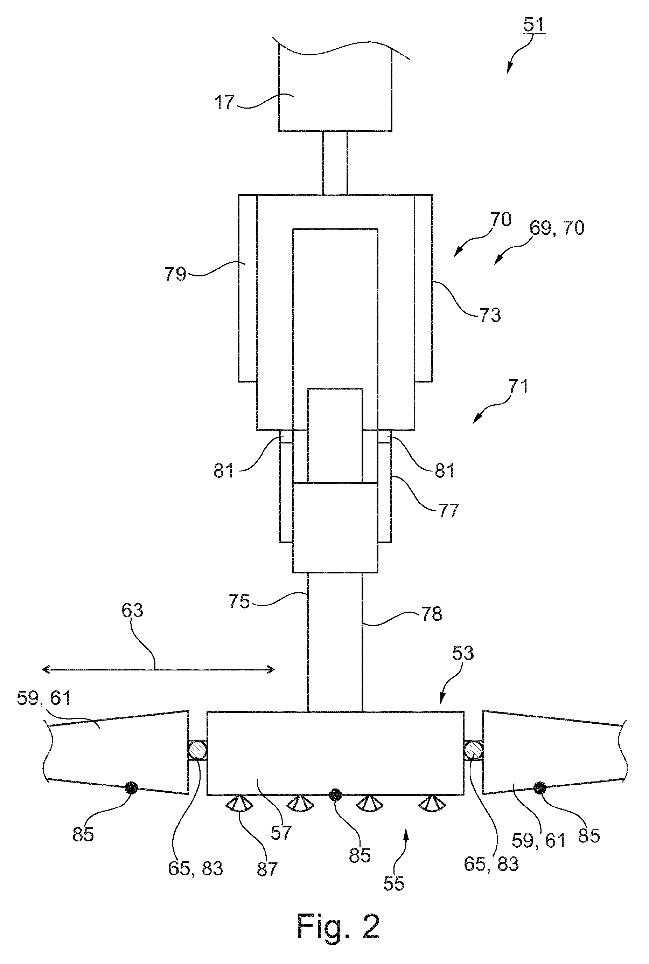

In Fig. 2 ist ebenfalls ein Ausschnitt einer Feldspritze 51 in einer schematischen Darstellung gezeigt. Wie auch die Feldspritze 51 gemäß Fig. 1 umfasst die Feldspritze 51 ein Gestänge 53 mit einem Ausleger 55. Der Ausleger besteht aus einem Mittelsegment 57 mit zwei am Mittelsegment 57 angeordneten Auslegerarmen 59. Beide Auslegerarme 59 sind mit jeweils zwei zueinander beweglichen Teilsegmente 61 ausgebildet, die über Gelenke 65 miteinander verbunden sind. Auf diese Weise können die Teilsegmente 61 nach Bedarf auseinander oder zusammengeklappt werden. Die Feldspritze 51 ist über ein Trägerelement 67 an einem Fahrzeug anbindbar.

Zur Höhenverstellung des gesamten Auslegers 55 ist zwischen dem Trägerelement 67 und dem Ausleger 55 eine Hubvorrichtung 69 - als Teil einer Betätigungsvorrichtung 70 - mit einem elektromechanischen Aktuator 71 angeordnet. Der elektromechanische Aktuator 71 ermöglicht die Höhenverstellung des gesamten Auslegers 55.

Der elektromechanischen Aktuator 71 umfasst wie der elektromechanische Aktuator 21 gemäß Fig. 1 ebenfalls einen Elektromotor 73 und eine Wandlereinheit 75 zur Drehmomentumwandlung. Die Drehmomentübertragung vom Elektromotor 73 zur Wandlereinheit 75 erfolgt hierbei direkt.

Die Wandlereinheit 75, die der Umwandlung der rotativen Bewegung des Elektromotors 73 in eine lineare Bewegung dient, ist vorliegend als ein Kugelgewindetrieb ausgeführt. Zur Ansteuerung des Elektromotors 73 des elektromechanischen Aktuators 71 umfasst die Hubvorrichtung 69 eine als Anbausteuergerät ausgebildete Steuereinheit 79.

Zur Festsetzung einer gewünschten Position des Auslegers 55 ist zwischen dem Elektromotor 73 und der Wandlereinheit 75 eine als Hubmagnet ausgebildete Sperrvorrichtung 81 angeordnet. So kann auch bei äußeren Krafteinwirkungen, wie sie beispielsweise durch Stöße oder Vibrationen hervorgerufen werden können, eine unerwünschte Verstellung des Auslegers 5 verhindert werden.

Zur Steuerung der Position der einzelnen Teilsegmente 61 der Auslegerarme 59 sind zwischen den jeweiligen Teilsegmenten 61 ebenfalls elektromechanische Aktuatoren 83 angeordnet, so dass ein Einklappen, ein Ausklappen oder auch ein Schwenken der Auslegerarme 59 bzw. deren Teilsegmente 61 umgesetzt werden kann.

Zur Abstandsmessung der Auslegerarme 59 bzw. des kompletten Auslegers 55 zum Boden sind an jedem Teilsegment 61 ebenso wie an dem Mittelsegment 57 der beiden Auslegerarme 59 jeweils ein als Relativsensor ausgebildete Sensoren 85 angeordnet. Die Signale der Sensoren 85 werden von der Steuereinheit 79 der Betätigungsvorrichtung 70 zur Steuerung der jeweiligen elektromechanischen Aktuatoren 71, 83 verwendet.

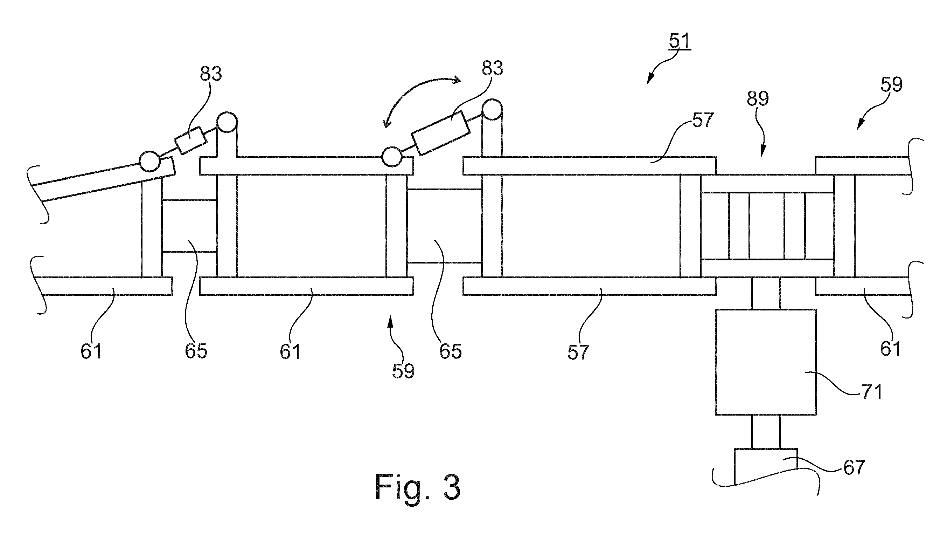

In Fig. 3 ist die Feldspritze 51 gemäß Fig. 2 in einer teilweisen Darstellung in einer Frontansicht gezeigt. Vorliegend ist nur einer der beiden Auslegerarme 59 gezeigt. Anhand der Darstellung ist die Anbindung des Auslegers 55 über das Mittelsegment 57 und ein Verbindungselement 89 an dem zur Höhenverstellung des Auslegers 55 eingesetzten elektromechanischen Aktuators 71 deutlich zu erkennen. Durch den elektromechanischen Aktuator 71 kann so der gesamte Ausleger 55 inklusive der Auslegerarme 59 höhenverstellt werden. Die Feldspritze 51 ist über ein Trägerelement 67 an einem Fahrzeug anbindbar.

Ebenso wird die Anordnung der elektromechanischen Aktuatoren 83 gezeigt, die zwischen dem Mittelsegment 57 und einem Teilsegment 61 und jeweils zwischen zwei Teilsegmenten 61 eines der beiden Auslegerarme 59 deutlich. Die elektromechanischen Aktuatoren 83 sind somit entweder an dem Mittelsegment 57 und einem Teilsegments 61 oder zwischen zwei über Gelenke 65 miteinander verbundenen Teilsegmenten 61 des Auslegers 55 angeordnet. So können die Teilsegmente 61 gegenüber dem Mittelsegment 57 des Auslegers 55 und auch gegenüber anderen Teilsegmenten 61 eingeklappt, ausgeklappt oder auch geschwenkt werden. bewegen. Die Feldspritze 51 ist über ein Trägerelement 67 an einem Fahrzeug anbindbar.

Selbstverständlich kann diese Anordnung der elektromechanischen Aktuatoren 83, wie sie für den vorliegenden beispielhaft gezeigt ist, für alle Aktuatoren gelten, die in der Feldspritze 51 zum Einsatz kommen.

Für die weitere detaillierte Beschreibung der Feldspritze 51 wird an dieser Stelle auf die Beschreibung zu Fig. 2 verwiesen.

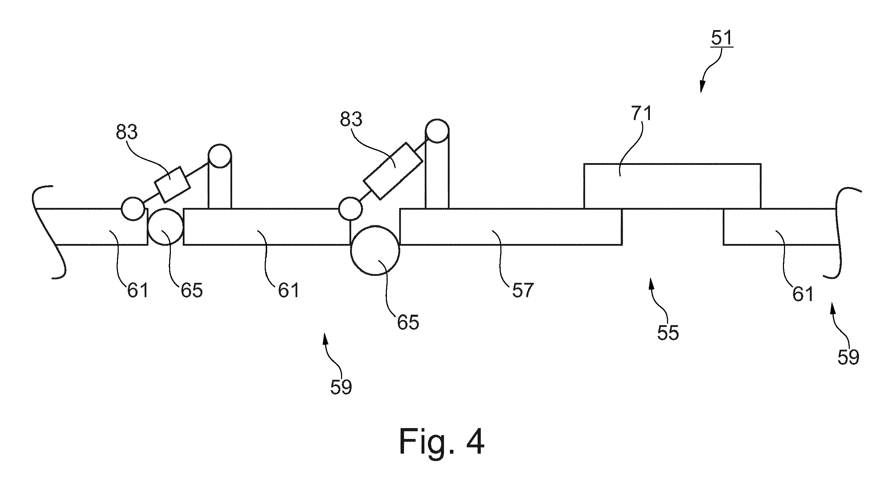

In Fig. 4 ist die Feldspritze 51 gemäß den Fig. 2 und 3 in einer Draufsicht gezeigt. Auch anhand dieser Darstellung ist die Anordnung der elektromechanischen Aktuatoren 71, 83, sowohl zur Höhenverstellung des gesamten Auslegers 55 als auch zur Betätigung der Auslegerarme 59 bzw. der Teilsegmente 59 der Auslegerarme 59, deutlich zu erkennen.

Dank der elektromechanischen Verstellung kann eine gleichbleibende Verstellgeschwindigkeit des Auslegers 55 unabhängig von der Umgebungstemperatur erreicht werden, wodurch das Ansprechverhalten des Auslegers 55 und/oder der Auslegerarme 69 verbessert wird. Darüber hinaus können unerwünschte Ölverluste vermieden werden, was im Agrarbereich insbesondere hinsichtlich des Umweltschutzes eine große Rolle spielt.

Eine weitere detaillierte Beschreibung der Feldspritze 51 kann der Beschreibung zu Fig. 2 und 3 entnommen werden.

### Bezugszeichenliste

- 1: Feldspritze
- 3: Gestänge
- 5: Ausleger
- 7: Mittelsegment
- 9: Auslegerarm
- 11: Teilsegment
- 13: Achse
- 15: Gelenk
- 17: Trägerelement
- 19: Hubvorrichtung
- 20: Betätigungsvorrichtung
- 21: elektromechanischer Aktuator
- 23: Elektromotor
- 25: Wandlereinheit
- 27: Getriebeelement
- 28: Spindel
- 29: Steuereinheit
- 31: Sperrvorrichtung
- 33: elektromechanischer Aktuator
- 35: Sensor
- 37: Spritzdüse
- 51: Feldspritze
- 53: Gestänge
- 55: Ausleger
- 57: Mittelsegment
- 59: Auslegerarm
- 61: Teilsegment
- 63: Achse
- 65: Gelenk
- 67: Trägerelement
- 69: Hubvorrichtung
- 70: Betätigungsvorrichtung
- 71: elektromechanischer Aktuator
- 73: Elektromotor
- 75: Wandlereinheit
- 77: Getriebeelement
- 78: Spindel
- 79: Steuereinheit
- 81: Sperrvorrichtung
- 83: elektromechanischer Aktuator
- 85: Sensor
- 87: Spritzdüse

## Patentansprüche

1. Arbeitsmaschine (1, 51), insbesondere Feldspritze, umfassend einen Ausleger (5, 55) mit einem Mittelsegment (7, 57) und mit einer Anzahl von am Mittelsegment (7, 57) angeordneten Auslegerarmen (9, 59), wobei die Auslegerarme (5, 59) jeweils eine Anzahl von relativ zueinander beweglichen Teilsegmenten (11, 61) umfassen, und wobei eine Anzahl von elektromechanischen Aktuatoren (21, 33, 71, 83) zur Höhenverstellung des Auslegers (5, 55) und/oder zur Betätigung des oder jeden Teilsegments (11, 61) eines jeweiligen Auslegerarms (5, 59) umfasst ist.

2. Arbeitsmaschine (1, 51) nach Anspruch 1, wobei zur Höhenverstellung des Auslegers (5, 55) eine am Mittelsegment (7, 57) des Auslegers (5, 55) ansetzende Hubvorrichtung (19, 69) vorgesehen ist, die einen elektromechanischen Aktuator (21, 33, 71, 83) umfasst.

3. Arbeitsmaschine (1, 51) nach Anspruch 1 oder 2, wobei an dem oder jedem Teilsegment (11, 61) wenigstens ein elektromechanischer Aktuator (21, 33, 71, 83) zur Betätigung des jeweiligen Teilsegments (11, 61) angeordnet ist.

4. Arbeitsmaschine (1, 51) nach einem der vorhergehenden Ansprüche, wobei der oder jeder elektromechanische Aktuator (21, 33, 71, 83) einen Elektromotor (23, 73) und eine Wandlereinheit (25, 75) zur Drehmomentumwandlung umfasst.

5. Arbeitsmaschine (1, 51) nach Anspruch 4, wobei die Wandlereinheit (25, 75) ein Getriebeelement (27, 77) umfasst.

6. Arbeitsmaschine (1, 51) nach einem der vorhergehenden Ansprüche, wobei zur Steuerung des oder jeden elektromechanischen Aktuators (21, 33, 71, 83) zumindest eine Steuereinheit (29, 79) umfasst ist.

7. Arbeitsmaschine (1, 51) nach einem der vorhergehenden Ansprüche, wobei zumindest eine Sperrvorrichtung (31, 81) zur Arretierung des Auslegers (5, 55) und/oder des oder jeden Auslegerarms (9, 59) umfasst ist.

8. Arbeitsmaschine (1, 51) nach einem der vorhergehenden Ansprüche, wobei an dem oder jedem Teilsegment (11, 61) des oder jeden Auslegerarms (9, 59) zumindest ein Sensor (35, 85) zu einer Abstandsmessung gegenüber dem Untergrund angeordnet ist.

9. Betätigungsvorrichtung (20, 70) mit einer Steuereinheit (29, 79) für einen Ausleger (5, 55) einer Arbeitsmaschine, insbesondere Feldspritze, wobei der Ausleger (5, 55) ein Mittelsegment (7, 57) und eine Anzahl von an diesem angeordneten Auslegerarmen (9, 59) umfasst, wobei der oder jeder Auslegerarm (9, 59) jeweils eine Anzahl von relativ zueinander beweglichen Teilsegmenten (11, 61) umfasst, wobei eine Anzahl von elektromechanischen Aktuatoren (21, 33, 71, 83) zur Höhenverstellung des Auslegers (5, 55) und/oder zur Betätigung des oder jeden Teilsegments (11, 61) eines jeweiligen Auslegerarms (5, 59) umfasst ist, und wobei die Steuereinheit (19, 69) zur Ansteuerung und Betätigung des oder jeden elektromechanischen Aktuators (21, 33, 71, 83) eingerichtet und ausgebildet ist.

10. Betätigungsvorrichtung (20, 70) nach Anspruch 9, wobei zur Höhenverstellung des Auslegers (5, 55) eine Hubeinrichtung (19, 69) mit einem Elektromotor (23, 73) und einer Wandlereinheit (25, 75) umfasst ist.
